# EUROPEAN PATENT APPLICATION

(11) **EP 1 026 688 A2**
(43) Date of publication of application: **09.08.2000**
(21) Application number: 00300730.9
(22) Date of filing: 31.01.2000
(51) Int. Cl.: G11B 33/12

(54) **Removable integrated multiple internal disk drive subsystem**

(30) Priority: 02.02.1999 US 243151
(71) Applicant: Siemens Information and Communication Networks Inc., Boca Raton, FL 33487 (US)
(72) Inventor: Churchill, Robert J., San Jose, CA 95112 (US); Hopla, Steven D., Mountain View, CA 94040 (US); Reyes, Jose G., San Jose, CA 95129 (US); Hannigan, Matthew T., San Jose, CA 95123 (US)
(74) Representative: Mohun, Stephen John

(57) **Abstract**

A computer system and a method of servicing the system utilize a disk drive array assembly (12) that can be internally installed into and removed from a host electronic casing (10) of the system as a single unit. The disk drive array assembly is an integrated single unit, housing a number of hard disk drives (18, 20, 22, 24 and 26). The disk drive array assembly can support a redundant inexpensive, or independent, disks (RAID) system. The disk drive array assembly is comprised of a disk cage (46), a backplane (16) and the hard disk drives. The disk cage and the backplane form an integrated housing unit (14 and 16) for the hard disk drives. The disk cage includes a number of tracks (50a, 50b, 52a, 52b, 54a, 54b, 56a, 56b, 58a and 58b), located on two lateral interior surfaces of the disk cage. Each track on one surface of the disk cage is laterally aligned to a track on the other surface. A pair of aligned tracks is designed to guide a single hard disk drive that is being inserted into the disk cage. In addition, the same pair of aligned tracks provides support for the disk drive after being inserted into the disk cage. The unitary design of the disk drive array assembly allows the disk drive array assembly to be transferred from one computer system to another computer system in an intact condition. Furthermore, the unitary design provides easy access to other electronic devices contained within the host electronic casing, since the disk drive arrays assembly can be removed from the host electronic casing in the same intact condition.

## Description

The invention relates generally to computer disk drives and more particularly to an internal disk drive array.

Hard disk drives are essential components of computer systems. Standard personal computers utilize a single hard disk drive to store and retrieve data. For most personal software applications, a single hard disk drive provides sufficient storage capacity and disk performance to property run a program. However, there are concerns that are associated with the implementation of a single hard disk drive in a computer system.

One concern is the storage capacity of the computer system. In a computer system having a single hard disk drive, the storage capacity of the system is limited to the storage capacity of the drive. When the storage capacity of the single hard disk drive is depleted, a practical solution is to increase the storage capacity of the system by replacing the old hard disk drive with a new hard disk drive having a larger storage capacity. However, the price of a hard disk drive increases dramatically with storage capacity. Therefore, replacing the old hard disk drive may be an expensive solution. Installing a second hard disk drive into the system in tandem with the original drive may be a less expensive solution. However, this solution carries the inconvenience of having two disk drives that must be individually accessed to store or retrieve data from one of the installed hard disk drives. In addition, neither of the above solutions increases the performance or reliability of storing data into and/or retrieving data from the installed disk drive(s).

Storage capacity, performance and reliability issues have contributed to the incentive of developing a disk drive array subsystem. One common type of disk drive array subsystem is known as a redundant array of inexpensive, or independent, disks (RAID). A RAID system consists of an array of hard disk drives that are connected to a RAID controller. The RAID controller is an electronic device that provides the interface between the processing devices of the computer system and the array of hard disk drives. The RAID controller provides a disk operation that is seamless and transparent to the processing devices. That is, the RAID controller interfaces with the processing devices and the array of disk drives in a manner that makes the array of disk drives appear as a single disk drive to the processing devices.

A RAID system offers significant advantages over a single disk drive. The RAID system has a storage capacity equal to the combined storage capacities of all the disk drives in the RAID system, instead of the storage capacity of the single disk drive. However, some of the storage capacity of the RAID system may be needed for storing redundant data. Furthermore, by utilizing various read and writing schemes, the RAID system is able to increase the performance of the disk operation, as well as increase the reliability of the disk operation. These RAID operating schemes typically utilize a data striping technique across two or more disks to allow simultaneous read and write operations to several disks, thereby increasing the disk operation performance. In addition, the RAID operating schemes may write redundant information called "parity bits" into one or more hard disk drives which can be used to recover lost information caused by a faulty disk drive.

A RAID system can be embodied as a separate external device that is cabled to a host computer system or can be embodied internally to the host computer system. U.S. Pat. No. 5,777,845 to Krum et al. describes a RAID system that is embodied as an external device. The RAID system of Krum et al. includes a mainframe chassis that contains a RAID controller and a motherboard. The mainframe chassis is configured to accommodate five disk drives and a power supply module. Three disk drives are stacked and positioned in one side of the chassis, while the remaining two disk drives and the power supply module are stacked and positioned in the other side. Attached to the interior back wall of the chassis is the motherboard that is coupled to a backplane to provide various connections for the disk drives and the power supply module. The mainframe chassis includes a door with shock absorbers that abut the disk drives and the power supply module when the door is closed. An external RAID system, such as the RAID system of Krum et al., provides flexibility with respect to transferability of the RAID system from one computer system to another computer system. However, the external RAID system contributes to a myriad of cables and casings that typically surround a computer system, creating a safety hazard for personnel. In addition, external RAID systems are generally more expensive than internal RAID systems.

An internal RAID system also includes an array of disk drives and a RAID controller. However, all the components of the internal RAID system reside within a host electronic casing, which may contain a CPU and peripheral electronic devices. The disk drives may be daisy-chained together to support the RAID system, or connected to a single backplane that provides connections for the disk drives and the RAID controller. If a backplane is utilized, the backplane is securely attached to the interior surface of the host electronic casing. A concern with an internal RAID system is that the RAID system is not easily transferable from one computer system to another computer system. In addition, access to the RAID controller card and|or the backplane may be difficult due to the confined area within the host electronic casing.

Although the known RAID systems operate well for their intended purposes, what is needed is an inexpensive RAID system that can be easily transferred from one computer system to another computer system, while providing efficient serviceability of the RAID system.

The invention is defined in the independent claims, to which reference should now be made. Further advantageous features are detailed in the dependent claims.

A computer system and a method of facilitating the servicing of the system according to one embodiment of the invention utilize a disk drive array assembly that can be internally installed into and removed from a host electronic casing of the system, as a single unit. The disk drive array assembly is an integrated single unit, housing a number of storage devices such as hard disk drives. In the preferred embodiment the disk drive array assembly can support a redundant inexpensive, or independent, disks (RAID) system.

The disk drive array assembly preferably includes a disk cage, a backplane (or back plate) and the hard disk drives. In one embodiment, the disk cage is a partially enclosed structure in the shape of a rectangular box without a front or a back wall. The disk cage defines a spatial region that can accommodate the hard disk drives. Preferably, the disk cage can accommodate five or more hard disk drives. Located on opposed lateral interior surfaces of the disk cage may be a number of tracks. Each track on a first surface of the disk cage is aligned with a track on the other surface. Each pair of aligned tracks is designed to guide a single hard disk drive that is inserted into the disk cage. In addition, the same pair of aligned tracks provides support for the disk drive, after being inserted into the disk cage. The number of tracks proportionally corresponds to the maximum number of hard disk drives that reside within the disk cage. In the preferred embodiment, the disk cage is made of a sheet metal to facilitate the manufacturing process of the disk cage.

The backplane is preferably attached to the disk cage such that the backplane becomes the missing back wall of the disk cage to form an integrated housing unit. The backplane preferably includes a number of data connectors that are positioned such that the hard disk drives are mated with a corresponding data connector when inserted into the disk cage. Thus, the number of data connectors equals the number of hard disk drives that can be accommodated by the disk drive array assembly. The backplane also preferably includes two power inlets that are electrically routed to the data connectors to supply power to the hard disk drives. In addition, the backplane may further include two controller connectors that are designed to be coupled to a disk controller card. The disk controller card provides an interface between the hard disk drives of the disk drive array assembly and the processing devices of the computer system.

After the backplane is attached to the disk cage, the hard disk drives are inserted into the disk cage and connected to the data connectors on the backplane. The hard disk drives may be one of many standard types of disk drives that are commercially available. For example, the hard disk drives may be small computer system interface (SCSI) 3.55 inch (8.69 cm) disk drives. The type of disk drive is not critical to the invention. The hard disk drives are equipped with disk drive accessory rails to engage the pairs of aligned tracks on the disk cage. On each hard disk drive, disk drive accessory rails are affixed to engage a pair of aligned tracks when the bard disk drive is inserted into the disk cage. The pair of aligned tracks guides the inserted hard disk drive so that the hard disk drive can be coupled to a corresponding data connector on the backplane. The assemblage of the disk drive array assembly is completed when all of the hard disk drives are inserted into the disk cage and are connected to the backplane.

The completed disk drive array assembly is then placed internally within the host electronic casing to support the RAID system, or any other disk array system. The disk drive array assembly can be secured to the host electronic casing by, for example, a number of screws. In an alternative installation process, the hard disk drives are inserted into the integrated housing unit after the integrated housing unit is placed and secured internally within the host electronic casing. After the disk drive array assembly has been placed internally within the host electronic casing, a power supply and the disk controller card can be connected to the backplane.

For a better understanding of the invention embodiments of it will now be described, by way of example, with reference to the accompanying drawings, in which:
Fig. 1 is a perspective view of an electronic equipment cabinet embodying a disk drive array assembly in accordance with the present invention.
Fig. 2 is an exploded view of the disk drive array assembly of Fig. 1, showing a number of disk drives, a disk cage and a backplane.
Fig. 3 is a front view of the backplane of a disk drive array assembly in accordance with the present invention.
Fig. 4 is a perspective view of the disk cage of a disk drive array assembly in accordance with the present invention.
Fig. 5 is a flow chart illustrating a method of servicing a computer system in accordance with the present invention.

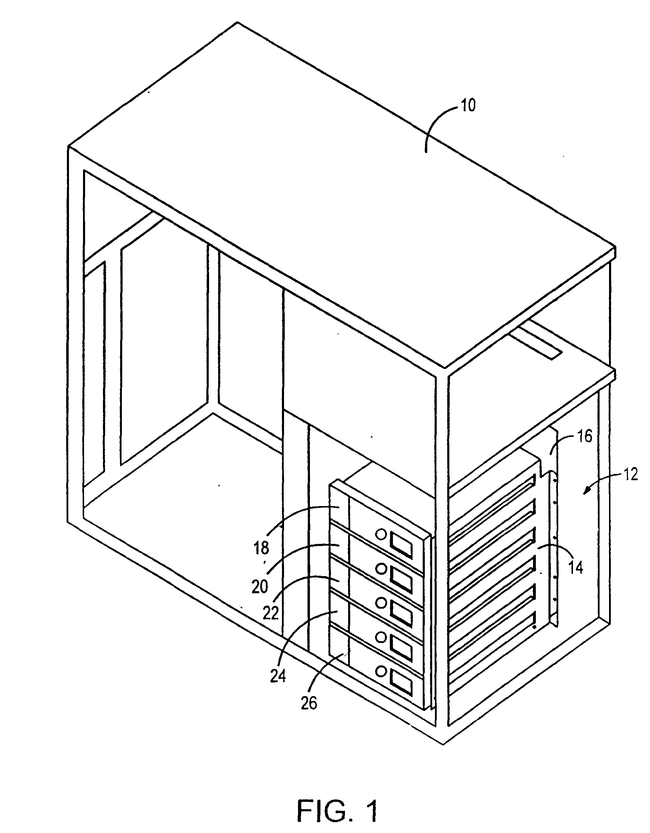

With reference to Fig. 1, an electronic equipment cabinet 10 embodying a disk drive array assembly 12 in accordance with the present invention is shown. The electronic equipment cabinet 10 may be developed into a network server or a computer tower for a personal computer system. Essentially, the electronic equipment cabinet 10 represents a casing that will house electronics for any computer system in which mass data storage is required. Consequently, the disk drive array assembly 12 provides the mass data storage for the computer system.

The disk array assembly 12 includes a disk cage 14, a backplane 16, and a number of hard disk drives 18, 20, 22, 24 and 26. Preferably, the array assently 12 is configured to accommodate the disk drives 18-26 to support a,redundant array of independent, or inexpensive, disks (RAID) system. The array assembly 12 is a fully integrated structure that can be installed into and/or removed from the electronic equipment cabinet 10 as a single unit. This design provides several advantages for installing components into the electronic cabinet 10, including the array assembly 12, and for servicing the installed components of the cabinet.

The unitary design of the array assembly 12 allows the disk cage 14, the backplane 16, and the disk drives 18-26 to be independently assembled, apart from other components of the cabinet 10. Initially, the disk cage 14 and the backplane 16 can be manufactured and then attached together to form an integrated housing unit. Once the backplane 16 is attached to the disk cage 14, the disk drives 18-26 can be installed into the integrated housing unit. The disk drives 18-26 can be individually inserted into the integrated housing unit and connected to the backplane 16, completing the assembling process for the array assembly 12. The assembled array assembly 12 can then be installed into the electronic equipment cabinet 10. Preferably, the array assembly 12 is mounted to the electronic equipment cabinet 10 by a few screws. In an alternative installation process, the disk drives 18 are not inserted into the integrated housing unit until the integrated housing unit is installed into the electronic equipment cabinet 10.

After installing the array assembly 12 into the electronic equipment cabinet 10, the array assembly 12 is electrically connected to other installed components in the electronic equipment cabinet 10. In particular, the backplane 16 is connected to a power supply (not shown) to provide electrical power to the disk drives 18. In addition, the backplane 16 is connected to a controller card (not shown) that controls the transfer of data from and to the disk drives 18 of the disk array assembly 12.

The unitary design of the disk array assembly 12 also allows easy removal of the entire disk array assembly from the electronic equipment cabinet 10 as a single unit. The complete removal of the disk array assembly 12 from the electronic equipment cabinet 10 facilitates access to the backplane 16 for servicing or for replacing the backplane. In addition, the easy removal of the disk array assembly 12 allows for quick access to other electronic components in the electronic equipment cabinet 10 that may have been obstructed or made difficult to access because of the installed disk array assembly 12. Furthermore, the disk array assembly 12 can be removed from the electronic equipment cabinet 10 and easily installed into another electronic equipment cabinet of a different computer system. Thus, the disk array assembly 12 can be easily transferred from one computer system to another computer system.

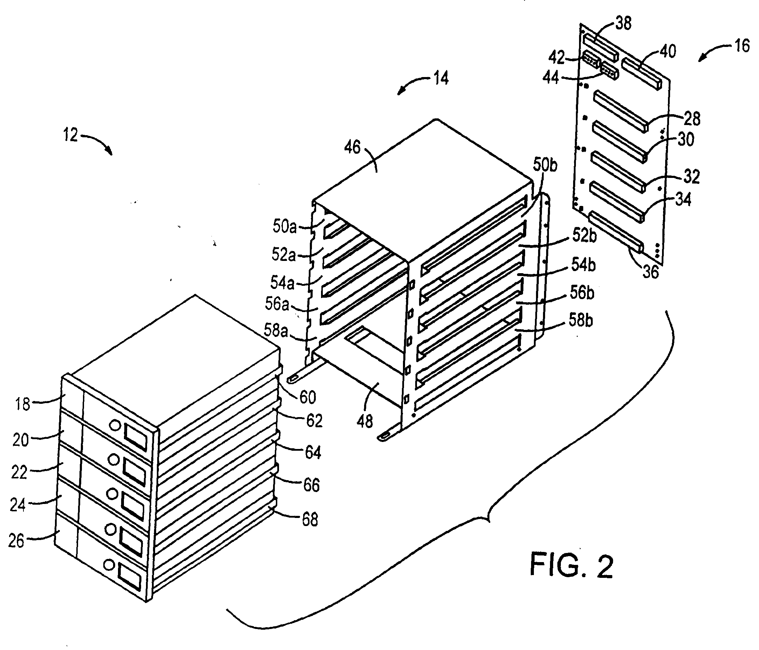

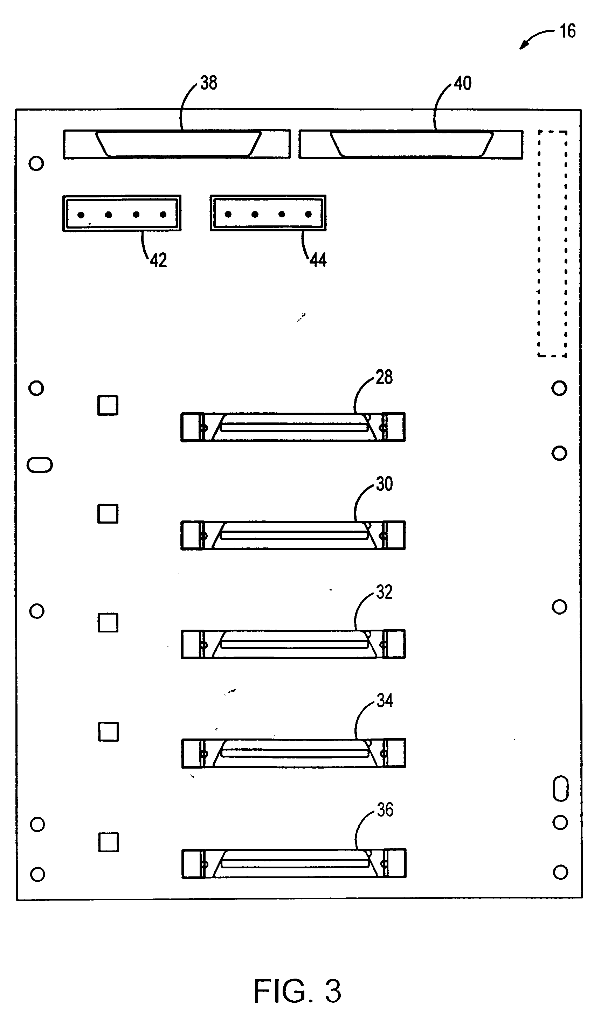

Turning to Fig. 2, an exploded view of the array assembly 12 is shown. In Fig. 2, various portions of the backplane 16, the disk cage 14 and the disk drives 18-20 that were visually obstructed in Fig. 1 are now visible. As shown in Fig. 2 and in Fig. 3, the backplane 16 includes five data connectors 28, 30, 32, 34 and 36. Each data connector is designed to be connected to a hard disk drive. The data connectors 28-36 can be connected to the disk drives 18-26, respectively. The backplane 16 also includes two controller card connectors 38 and 40. The data connectors 28-36 are bused to the connectors 38 and 40 in a known manner. The specific configuration of the connections between the connectors 28-36 and the connectors 38 and 40 for a RAID application are well known in the art and will not be described herein. The connectors 38 and 40 are designed to communicatively link the disk drives 18-26 to the controller card. When the controller card is coupled to the connectors 38 and 40, data can be retrieved from and/or stored into one or more of the disk drives 18-26, depending upon the RAID scheme utilized by the disk array assembly 12.

The backplane 16 also includes power inlets 42 and 44 that can be connected to the power supply to provide electrical power to the disk drives 18-26, when the disk drives 18-26 are connected to the backplane 16. The power inlets 42 and 44 may be configured such that the power inlet 42 provides electrical power to three of the five disk drives 18-26 that are connected to the backplane 16 via the connectors 28-36, while the power inlet 44 provides electrical power to the remaining two disk drives. The exact configuration of the connections between the power inlets 42 and 44 to the connectors 28-36 is not critical to the invention, as long as each connector 18, 20, 22, 24 or 26 is coupled to one or both power inlets 42 and 44 to receive electrical power. In an alternative configuration, the two power inlets 42 and 44 are replaced by a single power inlet that is connected to each of the connectors 28-36 to supply electrical power to all disk drives that are coupled to the backplane 16 via the connectors 28-36.

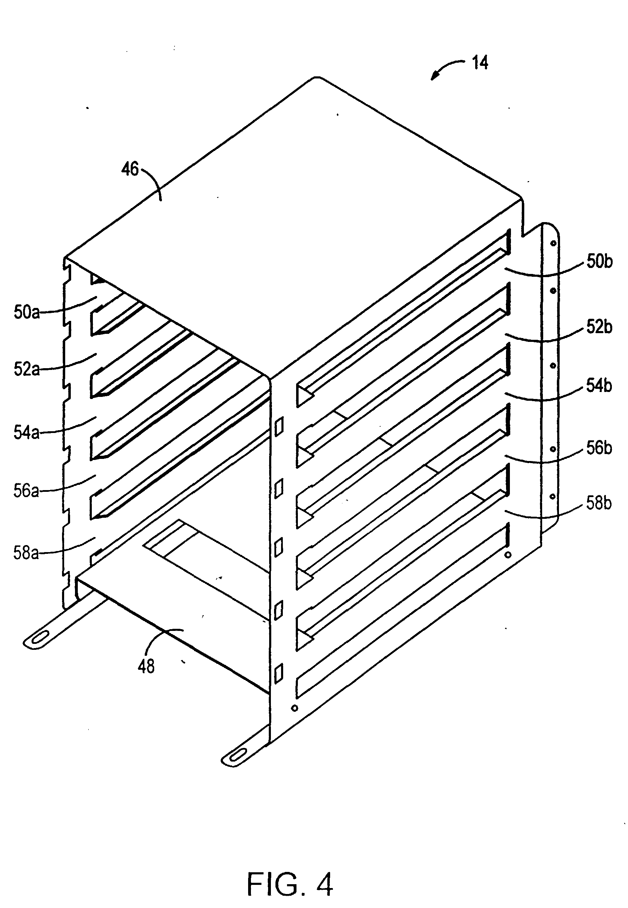

Also shown in Fig. 2 is the disk cage 14 of the disk array assembly 12. The disk cage 14 is shown separately in Fig. 4. The disk cage 14 is composed of an upper section 46 and a floor section 48. The upper section 46 includes a number of tracks 50a, 50b, 52a, 52b, 54a, 54b, 56a, 56b, 58a and 58b. Each track on one side of the upper section 46 is laterally aligned to a track on the other side of the upper section. The tracks 50a, 52a, 54a, 56a and 58a are laterally aligned with the tracks 50b, 52b, 54b, 56b and 58b, respectively. Thus, the upper section 46 includes five pairs of aligned tracks. A pair of aligned tracks is designed to guide a single hard disk drive 18-26 that is being inserted into the disk cage 14. In addition, the same pair of aligned tracks provides support for the inserted disk drive. The manner in which the disk drives 18-26 engage the tracks will be described below.

The lower section 48 is attached to the lower portion of the upper section 46. The lower section 48 provides structural stability to the disk cage 14 when attached to the upper section 46. In the preferred embodiment, the upper and lower sections 46 and 48 are made of sheet metal. The use of sheet metal to form the upper and lower sections 46 and 48 facilitates the manufacturing process. In this preferred embodiment, the lower section 48 may be welded to the upper section 46 to form the disk cage 14.

The disk cage 14, as shown, is configured to accommodate five hard disk drives, such as the disk drives 18-26. However, the array assembly 12 may be configured to accommodate fewer or more than five disk drives, depending on the need of the computer system being supported by the array assembly 12. In order for the disk drives 18-26 to be properly inserted into the disk cage 14, each disk drive is equipped with a disk drive accessory rail on opposed sides of the disk drive. In Fig. 2, only the disk drive accessory rails 60, 62, 64, 66 and 68 that are located on the right side of the disk drives 18-26 are shown. The disk drive accessory rails that are attached to the disk drives 18-26 may be one of many types of disk drive accessory rails that are commercially available. The type of disk drive accessory rails utilized is not critical to the invention. However, the disk drive accessory rails should be able to fit on the tracks of the disk cage 14 for insertion and removal of disk drives 18-26 from the disk cage.

The assembling of the disk array assembly 12 is a non-complex process. First, the backplane 16 is attached to the disk cage 14 to form the integrated housing unit. Preferably, only six screws are necessary to secure the backplane 16 to the disk cage 14. After attaching the backplane 16 to the disk cage 14, the disk drives 18-26 can be installed into the unit. Each of the disk drives 18-26 is inserted into the integrated housing unit such that the two disk drive accessory rails on the disk drive engage a pair of lateral tracks on the disk cage 14. For example, the disk drive 18 may be inserted into the integrated housing unit such that the disk drive accessory rail 60 is on the track 50b, while the other accessory rail (not shown) is on the track 50a. The tracks 50a and 50b guide the disk drive 18 toward the backplane 16. The tracks 50a and 50b are aligned with respect to the data connector 28 such that the disk drive 18 is mated with the data connector 28 when fully inserted into the integrated housing along the tracks 50a and 50b. In a similar manner, the disk drive 20 can be inserted into the integrated housing unit along the tracks 52a and 52b and can be connected to the data connector 30. The disk drive 22 can also be inserted into the integrated housing unit along the tracks 54a and 52b and connected to the data connector 30. Similarly, the disk drive 24 can be inserted into the integrated housing unit along the tracks 56a and 56b and connected to the data connector 32, while the disk drive 26 can be inserted along the tracks 58a and 58b and connected to the data connector 36. In an alternative assembling process, the disk drives 18-26 are inserted into the integrated housing unit after the integrated housing unit has been installed into the electronic equipment cabinet 10.

The disk drives 18-26 may be one of many known types of disk drives that are commercially available. The type of disk drives is not critical to the invention. For example, the disk drives 18-26 may be small computer system interface (SCSI) 3.5 inch (8.89 cm) disk drives. Therefore, the disk cage 14 may be modified to accommodate the particular type of the disk drives 18-26. Accordingly, the size of the backplane 16 and the positions of the data connectors 28-36 on the backplane may also be modified to meet the dimensional requirements of the disk drive 18-26. In an alternative configuration, the disk drives 18-26 may include more than one type of disk drive.

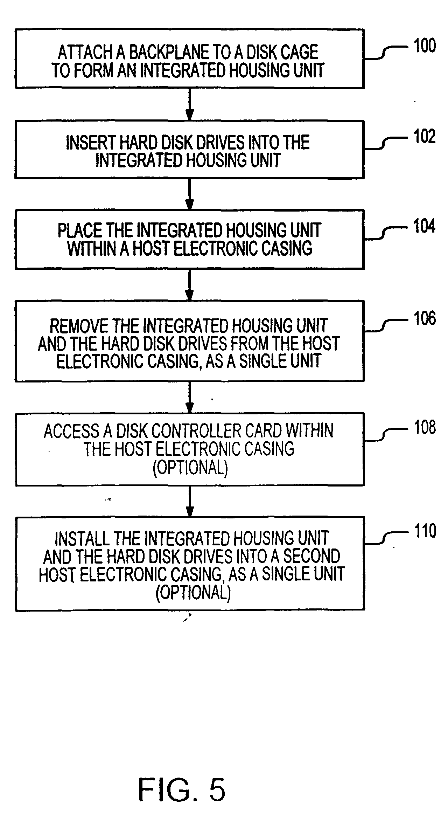

A method of servicing a computer system in accordance with the present invention will be described with reference to Fig. 5. At step 100, the backplane 16 is attached to the disk cage 14 to form the integrated housing unit. Next, at step 102, the hard disk drives 18-26 are inserted into the integrated housing unit and connected to the data connectors 28-36 of the backplane 16, completing the formation of the disk drive array assembly 12. After the hard disk drives 18-26 have been inserted into the integrated housing unit, the disk drive array assembly 12 is placed within a first host electronic casing of the computer system, such as the electronic equipment cabinet 10, at step 104. In an alternative embodiment, the hard disk drives 18-26 are inserted into the integrated housing unit after the integrated housing unit has been placed within the first host electronic casing. At step 106, the disk drive array assembly 12 is removed as a single unit from the first host electronic casing. The step 106 is followed by two optional steps. At an optional step 108, the disk controller card, installed within the first host electronic casing, is accessed. The complete removal of the disk drive array assembly 12 from the first host electronic casing allows easy access to the disk controller card for replacement or repair, as well as access to other installed electronic devices within the first host electronic casing. At an optional step 110, the disk drive array 12 is installed into a second host electronic casing, again as a single unit. The second host electronic casing may be a component of the computer system or a component of a different computer system.

An advantage of embodiments of the invention is that the unitary design of the disk drive array assembly allows the disk cage, the backplane and the hard disk drives to be independently assembled, i.e., apart from other components of the computer system. In addition, the unitary design may allow removal of the disk drive array assembly in an intact condition from the host electronic casing, as well as installation of the removed disk drive array assembly in the same intact condition into another host electronic casing. The second host electronic casing may be part of the original computer system or part of a different computer system. Thus, the disk drive array assembly may be readily transferable from one computer system to another computer system. Furthermore, the removal of the disk drive array assembly in the intact condition provides an easy access to other electronic devices contained within the host electronic casing. In particular, a faulty disk controller card can be easily accessed for replacement or repair.

Another advantage is that the use of the backplane to form the integrated housing unit for the hard disk drives reduces the manufacturing cost of the disk drive array assembly. Still another advantage is that the disk drive array assembly is installed within a host electronic casing, reducing the number of external cables and devices that may be connected to the host electronic casing.

## Claims

1. A computing system comprising:
a host electronic casing (10); and
a disk drive array assembly (12) for positioning within said host electronic casing, said disk drive array assembly being an integrated unit such that said disk drive array assembly is wholly removable in an intact condition from said host electronic casing, said disk drive array assembly including:
(a) a housing (14) configured to provide structural integrity to said disk drive array assembly, said housing defining a spatial region that accommodates a plurality of storage devices (18, 20, 22, 24 and 26); and
(b) a backplane (16) coupled to said housing, said backplane having a plurality of data connectors (28, 30, 32, 34 and 36) that are designed to communicatively connect to said plurality of storage devices.

2. A system according to claim 1 wherein said housing (14) is a partially enclosed structure and said backplane (16) is integrally coupled to said housing such that said spatial region is further enclosed by said backplane.

3. A system according to claim 1 or 2 wherein said housing (14) includes a plurality of tracks (50a, 50b, 52a, 52b, 54a, 54b, 56a, 56b, 58a and 58b) for positioning said storage devices (18, 20, 22, 24 and 26) within said housing such that said storage devices are physically mated with said data connectors (28, 30, 32, 34 and 36) on said backplane (16) when said storage devices are fully inserted into said housing while being engaged with said tracks.

4. A system according to claim 3 wherein said tracks (50a, 50b, 52a, 52b, 54a, 54b, 56a, 56b, 58a and 58b) are located on first and second interior surfaces of said housing (14), each of said tracks on said first interior surface being generally aligned to a particular track on said second interior surface in a lateral direction to engage one of said storage devices (18, 20, 22, 24 and 26).

5. A system according to any of the preceding claims wherein said backplane (16) includes a controller connector (38 and 40) that is designed to be coupled to an external device, said controller connector being communicatively linked to at least one of said data connectors (28, 30, 32, 34 and 36) on said backplane.

6. A system according to any of the preceding claims wherein said plurality of storage devices (18, 20, 22, 24 and 26) are a plurality of hard disk drives.

7. A method of facilitating the servicing of a computer system having an internal disk array subsystem (12) comprising steps of
attaching (100) a backplane (16) to a housing (14) to form an integrated housing unit (14 and 16) that can accommodate a plurality of discrete storage devices (18, 20, 22, 24 and 26);
inserting (102) said plurality of storage devices into said integrated housing unit such that said storage devices are communicatively coupled to said backplane of said integrated housing unit;
placing (104) said integrated housing unit within a host electronic casing (10); and
thus allowing removal of said integrated housing unit and said plurality of storage devices as a single unit from said host electronic casing when servicing is required.

8. A method according to claim 7 further comprising a step of installing (110) said integrated housing unit (14 and 16) and said plurality of storage devices (18, 20, 22, 24 and 26) as said single unit within a second host electronic casing after said step of removing (106) said integrated housing unit for servicing.

9. A method according to any of the preceding method claims further comprising a step of accessing (108) an electronic device installed within said host electronic casing (10) after said step of removing (106) said integrated housing unit (14 and 16).

10. A method according to any of the preceding method claims wherein said step of inserting (102) said plurality of storage devices (18, 20, 22, 24 and 26) includes engaging tracks (50a, 50b, 52a, 52b, 54a, 54b, 56a, 56b, 58a and 58b) that are located on an interior surface of said integrated housing unit (14 and 16) with accessory rails (60, 62, 64, 66 and 68) that are attached to said storage devices.
